Europäisches Patentamt

European Patent Office

Office européen des brevets

(19)

(11) Numéro de publication: **0 339 170**
**A1**

## DEMANDE DE BREVET EUROPEEN

(12)

(21) Numéro de dépôt: **88810272.0**

(22) Date de dépôt: **27.04.88**

(51) Int. Cl.⁴: **A61C 13/265**

(43) Date de publication de la demande:
**02.11.89 Bulletin 89/44**

(84) Etats contractants désignés:
**AT BE CH DE ES FR GB IT LI LU NL SE**

(71) Demandeur: **PHARMA DIFFUSION S.A.**
**Rue Alex-Moser 17**
**CH-2501 Bienne(CH)**

(72) Inventeur: **Sandhaus, Sami, Dr.**
**Chemin de l'Ormet 52**
**CH-1024 Ecublens(CH)**

(74) Mandataire: **Misrachi, Alfred**
**15, Ch. de la Plantaz**
**CH-1024 Ecublens(CH)**

(54) **Ensemble d'éléments d'attachement pour prothèses dentaires.**

(57) L'ensemble comprend :
- au moins un pilier calcinable prismatique (1) destiné à être fixé à une couronne et comportant à sa base un bras de soutien (2) et une prise cylindrique (3) disposée en bout du bras de soutien en position parallèle au pilier,
- des pièces de liaison calcinables (19) destinées à être intégrées à la prothèse,
- des organes de fixation (11, 12) des pièces de liaison sur le pilier prismatique.

Le pilier (1) et sa prise (3) en position déportée constituent un élément de prise universel extracoronaire facilement ajustable allié à la modularité des pièces de liaison de l'ensemble permettent le montage de plusieurs types d'attachements différents avec un minimum d'unités fixables sur un même pilier.

_FIG.-2_

## Ensemble d'éléments d'attachement pour prothèses dentaires.

La présente invention a pour objet un ensemble d'éléments d'attachement pour prothèses dentaires comprenant au moins un pilier prismatique calcinable destiné à être fixé à une couronne et présentant une prise, et des pièces de liaison calcinables destinées à être fixées à la prise et à constituer un support pour une prothèse.

Les ensembles d'éléments d'attachement disponibles sur le marché et dont les éléments calcinables sont destinés à disparaître par calcination au moulage des prothèses, sont tous unifonctionnels, c'est-à-dire qu'ils ont toujours une forme préfixée destinée à une fonction spécifique, et ceci fait qu'ils ne sont pas adaptables à la configuration de la dentition du patient sans changement de forme nécessitant une adaptation entraînant un gros travail sur le matériel et surtout sur la dentition.

C'est pourquoi le praticien doit de préférence disposer d'un grand nombre d'ensembles d'éléments d'attachement parmi lesquels il peut choisir au plus près de ses besoins celui qui demandera le moins de travail d'adaptation et respectera le mieux l'intégrité de la dentition du patient. Un tel choix n'est pas toujours évident.

La multiplicité des ensembles d'éléments d'attachement offerts sur le marché prouve inéluctablement ce besoin.

L'invention a pour but une simplification du travail du praticien en offrant la meilleure adaptation intrinsèque du matériel à la morphologie dentaire des patients, ne demandant qu'un minimum de retouches sur seulement le matériel pour permettre la résolution de la plupart des problèmes posés en prothétique.

A cet effet, l'ensemble d'éléments d'attachement selon l'invention, du type défini en ·début d'exposé, est caractérisé par un pilier prismatique comportant à sa base un bras de soutien latéral et une prise cylindrique disposée en bout du bras de soutien et à distance du pilier prismatique, parallèle à ce dernier et percée d'un trou cylindrique axial, par des pièces de liaison différentes les unes des autres et interchangeables, adaptées chacune d'elles à une prothèse spécifique, et par des organes de fixation des pièces de liaison à la prise cylindrique du pilier adaptés chacun d'eux à une fixation spécifique.

De la sorte, la prise cylindrique en position déportée par rapport au pilier prismatique devient un élément de prise universel utilisable soit tel quel sans retouches soit avec retouches de formes faciles à exécuter par sa position extra-coronaire selon la forme et la nature des pièces de liaison destinées à y être fixées. La forme cylindrique de la prise alliée à son trou axial cylindrique offre en effet une multiplicité de possibilités de fixations simples des pièces de liaison par vissage, emmanchement forcé ou pinçage interne ou externe, selon la nature fixe ou amovible de la prothèse à attacher, et ne nécessitant que des retouches mineures telles que taraudage ou alésage du trou cylindrique et tronçonnage radial ou fraisage axial du cylindre.

Cette position déportée de la prise cylindrique par rapport au pilier prismatique permet une adaptation aisée à la morphologie du patient par ajustement de la partie basse du pilier et du bras de soutien à la gencive et par ajustement de sa hauteur par simples meulages.

Dans le cas d'utilisation pour l'attachement d'un bridge, un rétablissement aisé du parallélisme de piliers convergents ou divergents peut se faire par simple rectification par meulage de la face de fixation de ces derniers sur les couronnes sans nécessiter de retouches des dents elles-mêmes.

Enfin, alliées à la versatilité de la prise cylindrique du pilier prismatique, les différentes pièces de liaison et leurs organes de fixation adaptés chacun d'eux à une prothèse et à une fixation spécifiques permettent une rationalisation du travail du praticien à partir d'un minimum d'éléments interchangeables fixables sur un même pilier de base.

L'invention a également pour objet, basé sur son concept, un élément d'attachement non calcinable pour prothèse dentaire, caractérisé en ce qu'il est obtenu par moulage d'un élément d'attachement calcinable provenant d'un ensemble d'éléments d'attachement comprenant au moins un pilier prismatique calcinable comportant à sa base un bras de soutien latéral et une prise cylindrique disposée en bout du bras de soutien et à distance du pilier prismatique, parallèle à ce dernier et percée d'un trou cylindrique axial, et comprenant des pièces de liaison calcinables destinées à être fixées à une prothèse dentaire qui sont différentes les unes des autres et interchangeables, adaptées chacune d'elles à une prothèse spécifique et comprenant des organes de fixation des pièces de liaison à la prise cylindrique du pilier adaptés chacun d'eux à une fixation spécifique.

Dans le cadre du concept de l'invention il peut être en effet intéressant pour le praticien de disposer d'éléments non calcinables directement utilisables pour l'attachement d'une prothèse, notamment dans le cas d'une aptitude d'adaptation intrinsèque de ces éléments à la morphologie du patient ne nécessitant pas de retouches d'ajustement.

L'invention sera bien comprise à l'aide du dessin annexé et de la description qui suit.

Le dessin annexé représente à titre d'exemple, une forme d'exécution de l'ensemble d'éléments d'attachement, objet de l'invention.

La figure 1 est une vue en perspective de l'élément de base de cet ensemble.

Les figures 2, 3, 4, 5 et 6 sont des vues éclatées en perspective de cinq structures d'attachement différentes résultant chacune du montage de certaines pièces de liaison calcinables de cet ensemble avec l'élément de base représenté figure 1.

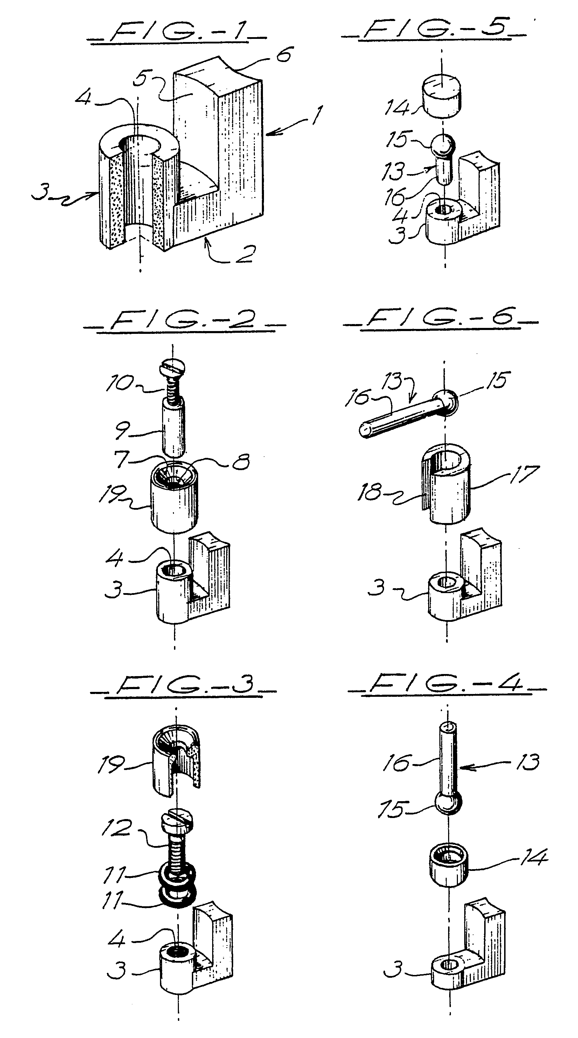

L'élément de base représenté figure 1, de nature calcinable, est constituée par un pilier prismatique 1, destiné à être fixé sur une couronne dentaire, comportant à sa base un bras de soutien 2 de section rectangulaire formant un L avec le pilier 1 et une prise cylindrique 3 disposée en bout du bras de soutien 2 et à distance du pilier 1, parallèle à ce dernier et percée d'un trou cylindrique axial débouchant 4.

Le pilier prismatique 1 comporte une première face latérale concave 5 orientée en regard de la prise cylindrique 3 dont le rayon de courbure est centré sur l'axe de révolution de celle-ci, et une seconde face latérale concave 6 opposée à la première et dont le rayon de courbure correspond à celui de la courbure moyenne de la face latérale des couronnes usuelles sur lesquelles ce pilier est destiné à être fixé.

La concavité de la face latérale 5 permet l'écart minimal entre l'axe de révolution de la prise cylindrique 3 et le pilier 1, compte tenu de l'épaisseur de la paroi latérale de cette prise 3 et de l'épaisseur de la paroi latérale de certaines pièces de liaison en forme de manchons destinées à être enfoncées autour de cette prise et qui sont décrites plus loin.

La concavité de la face opposée facilite l'ajustement du pilier sur la couronne.

Lorsque ces effets ne sont pas directement recherchés, le pilier prismatique 1 peut être de section droite rectangulaire.

La première structure d'attachement représentée figure 2, qui est applicable à l'attachement d'un bridge amovible, résulte du montage d'un manchon cylindrique calcinable 19 sur la prise cylindrique 3 de l'élément de base représentée figure 1 et de l'inclusion dans cette prise d'une douille cylindrique 9 et de sa vis 10.

Le manchon cylindrique 19 comporte un fond tronconique 7 percé d'un trou axial 8 et présente un diamètre intérieur correspondant au diamètre extérieur de la prise cylindrique 3 de l'élément de base. Ce manchon cylindrique est ici destiné à être enfoncé autour de cette prise cylindrique 3.

La douille cylindrique 9 est percée d'un trou fileté axial dans lequel la vis 10 est destinée à être vissée, cette douille étant elle-même destinée à être engagée dans le trou axial 4 de la prise cylindrique 3, après alésage de ce trou au diamètre de cette douille, au travers du trou axial du manchon cylindrique 19.

Dans une variante simplifiée non représentée, applicable aux prothèses fixes, l'attachement peut être prévu par vissage direct dans la prise cylindrique 3 à l'aide d'une vis faisant partie de l'ensemble, après taraudage préalable du trou axial 4 de cette prise cylindrique 3.

La seconde structure d'attachement représentée figure 3 est avantageusement applicable aux prothèses nécessitant un attachement à suspension élastique. Cette seconde structure d'attachement résulte du montage du manchon cylindrique calcinable 19 déjà décrit précédemment sur un support élastique composé de deux rondelles élastiques 11 expansibles latéralement par pression axiale, du genre connu en construction mécanique sous le nom de o-ring, et d'une vis 12 à tête plate enfilée au travers de ces deux rondelles 11 et vissée dans le trou axial 4 préalablement taraudé de la prise cylindrique 3 de l'élément de base.

Dans cette seconde structure d'attachement, la force de retenue du manchon cylindrique 19, après coulage, est modulable par le moyen de la vis 12, et c'est là un avantage particulièrement intéressant pour ce type d'attachement à suspension élastique.

Le nombre de rondelles élastiques 11 peut être supérieur à deux ou bien encore ces rondelles de type o-ring peuvent être remplacées par une seule rondelle cylindrique constituée par exemple par un tronçon de tube de matière élastique.

La troisième structure d'attachement représentée figure 4 est applicable aux prothèses nécessitant un attachement non élastique mais susceptible de concéder une certaine liberté de déplacement angulaire de faible amplitude.

Cette troisième structure d'attachement résulte du montage de deux boutons pression mâle et femelle 13 et 14 calcinables sur la prise cylindrique 3 préalablement tronçonnée radialement de l'élément de base.

Le bouton pression femelle 14 se présente sous la forme d'une cuvette à fond plat destinée à être collée sur la face tronçonnée de la prise cylindrique 3 et dont la paroi latérale cylindrique présente une rétreinte périphérique intérieure de retenue.

Le bouton pression mâle 13 se présente sous la forme d'une tête sphérique 15 prolongée d'une tige cylindrique 16, la tête sphérique 15 étant destinée à être emprisonnée partiellement par clipage forcé dans la cuvette du bouton pression femelle 14. La tige cylindrique 16 de ce bouton pression mâle 13 est prévue d'un diamètre susceptible de permettre son emmanchement à force dans le trou 4 de la prise cylindrique 3 de l'élément de base pour utilisation dans une autre structure d'attachement décrite plus loin.

Dans une variante non représentée du bouton pression femelle 14, celui-ci présente également une tige axiale cylindrique destinée à sa fixation sur la prise 3 de l'élément de base par emmanchement à force de cette tige dans le trou axial 4 de cette prise.

La quatrième structure d'attachement représentée figure 5 est de même application que la précédente et se compose des mêmes éléments calcinables, avec cette différence qu'ici la liaison est inversée, le bouton pression mâle 13 étant emmanché à force par sa tige cylindrique 16 dans le trou 4 de la prise cylindrique 3 de l'élément de base, et le bouton pression femelle 14 étant clipé à force sur la tête sphérique 15 du bouton pression mâle 13.

La cinquième et dernière structure d'attachement représentée figure 6 est comparable dans ses applications à la troisième structure représentée figure 4, avec ici cette différence que la pièce de liaison est constituée par un manchon cylindrique sans fond 17 dont la paroi latérale présente une fente axiale 18 sur toute sa hauteur, ce manchon étant destiné à être fixé par enfoncement autour de la prise cylindrique 3 de l'élément de base.

Selon la longueur donnée à ce manchon 17, un ou plusieurs bouton pression mâle 13, du genre déjà décrit précédemment, peuvent être emmanchés avec leur tige 16 en position radiale d'engagement dans la fente 18.

Dans cette forme d'exécution de l'ensemble d'éléments d'attachement donnée en exemple et illustrée par le dessin, la modularité des conformations de raccordement des éléments calcinables, telles que celles de la prise 3 de l'élément de base et celles des manchons 17 et 19 et des boutons pression 13 et 14, entre pour une grande part dans l'aptitude à la rationalisation du travail du praticien offert par l'invention.

Mais cette forme d'exécution n'est pas limitative et des variantes pourront être apportées non seulement dans ses formes structurales, comme celles déjà signalées précédemment, mais également dans ses structures fonctionnelles qui peuvent être soit prévues à la conception des éléments soit réalisées par le praticien lui-même.

Ainsi par exemple la prise cylindrique 3 de l'élément de base peut être alésée à un diamètre sensiblement inférieur à celui de la tête sphérique 15 du bouton pression mâle 13 et sa paroi latérale fendue latéralement soit sur toute sa hauteur par une seule fente, soit par plusieurs fentes arrêtées vers le bas ou niveau supérieur du bras de soutien 2. Par cette appropriation simple il est possible d'engager dans cette prise 3 et de maintenir par pression élastique plus ou moins grande un ou plusieurs boutons pression mâles 13.

Enfin, étant donné que les éléments calcinables selon l'invention sont destinés à être coulés après montage et ajustement des structures d'attachement, l'invention s'étend également à tout élément non calcinable provenant du moulage de l'un quelconque de ses éléments calcinables d'origine. Et ceci du fait qu'il est intéressant pour le praticien d'éviter le coulage lorsque les formes structurales des éléments calcinables s'adaptent sans retouches ou presque à la morphologie du patient.

## Revendications

1. Ensemble d'éléments d'attachement pour prothèses dentaires comprenant au moins un pilier prismatique calcinable destiné à être fixé à une couronne et présentant une prise, et des pièces de liaison calcinables destinées à être fixées à la prise et à constituer un support pour une prothèse, caractérisé par un pilier prismatique (1) comportant à sa base un bras de soutien latéral (2) et une prise cylindrique (3) disposée en bout du bras de soutien et à distance du pilier prismatique, parallèle à ce dernier et percée d'un trou cylindrique axial (4), par des pièces de liaison (13, 14, 17, 19) différentes les unes des autres et interchangeables, adaptées chacune d'elles à une prothèse spécifique, et par des organes de fixation (9, 10, 11, 12) des pièces de liaison à la prise cylindrique du pilier adaptés chacun d'eux à une fixation spécifique.

2. Ensemble d'éléments selon la revendication 1, caractérisé en ce que le pilier prismatique comporte une face latérale concave (5) orientée en regard de la prise cylindrique (3) et dont le rayon de courbure est centré sur l'axe de révolution de celle-ci.

3. Ensemble d'éléments selon la revendication 1, caractérisé en ce que le pilier prismatique comporte deux faces latérales opposées concaves (5, 6) dont l'une (5) est orientée en regard de la prise cylindrique (3) et présente un rayon de courbure centré sur l'axe de révolution de celle-ci et dont l'autre (6) présente un rayon de courbure correspondant à la courbure moyenne de la face latérale d'une couronne.

4. Ensemble d'éléments selon la revendication 1, caractérisé en ce qu'il comporte au moins une pièce de liaison calcinable constituée par un manchon cylindrique (19) comportant un fond tronconique (7) percé d'un trou axial (8), l'intérieur de ce manchon étant d'un diamètre correspondant au diamètre extérieur de la prise cylindrique (3) du pilier.

5. Ensemble d'éléments selon les revendications 1 et 4, caractérisé en ce qu'il comporte au moins un jeu d'organes de fixation constitué par une douille cylindrique (9) percée d'un trou fileté axial et par une vis (10) destinée à être vissée dans le trou fileté de la douille, cette dernière étant destinée à être engagée dans le trou axial (4) de la prise cylindrique (3) du pilier, après alésage de ce trou, au travers du trou axial du manchon cylindrique (19), ce dernier étant enfoncé autour de la prise cylindrique du pilier.

6. Ensemble d'éléments selon les revendications 1 et 4, caractérisé en ce qu'il comporte au moins un jeu d'organes de fixation constitué par au moins une rondelle élastique (11) expansible latéralement par pression axiale et par une vis (12) destinée à être enfilée au travers de la rondelle élastique et vissée dans le trou axial (4) préalablement taraudé de la prise cylindrique (3) du pilier, la rondelle élastique étant destinée à maintenir élastiquement le manchon cylindrique (19) par emmanchement à l'intérieur de ce dernier et par pression radiale contre sa paroi latérale.

7. Ensemble d'éléments selon la revendication 1, caractérisé en ce qu'il comporte au moins un jeu de deux pièces de liaison calcinables constitué par un bouton pression mâle (13) et un bouton pression femelle (14), l'un de ces deux boutons étant destiné à être fixé à et sur la prise cylindrique (3) du pilier, celle-ci étant préalablement ajustée à hauteur désirée.

8. Ensemble selon la revendication 7, caractérisé en ce que le bouton pression mâle (13) est composé d'une tête sphérique (15) prolongée d'une tige cylindrique (16) susceptible d'être emmanchée à force dans le trou axial (4) de la prise cylindrique (3) du pilier.

9. Ensemble d'éléments selon la revendication 1, caractérisé en ce qu'il comporte au moins un jeu de pièces de liaison calcinables constitué par un manchon cylindrique sans fond (17) dont la paroi latérale présente une fente axiale (18), ce manchon étant destiné à être enfoncé autour de la prise cylindrique (3) du pilier, et par au moins un bouton pression mâle (13) composé d'une tige cylindrique (16) engageable dans la fente axiale du manchon et une tête sphérique (15) engageable par pression à l'intérieur dudit manchon cylindrique sans fond.

10. Elément d'attachement non calcinable pour prothèse dentaire, caractérisé en ce qu'il est obtenu par moulage d'un élément d'attachement calcinable provenant d'un ensemble d'éléments d'attachement comprenant au moins un pilier prismatique calcinable (1) comportant à sa base un bras de soutien latéral (2) et une prise cylindrique (3) disposée en bout du bras de soutien et à distance du pilier prismatique, parallèle à ce dernier et percée d'un trou cylindrique axial, des pièces de liaison calcinables (13, 14, 17, 19) destinées à être fixées à une prothèse dentaire qui sont différentes les unes des autres et interchangeables, adaptées chacune d'elles à une prothèse spécifique, et des organes de fixation (9, 10, 11, 12) des pièces de liaison à la prise cylindrique du pilier adaptés chacun d'eux à une fixation spécifique.

EP 0 339 170 A1

_FIG.-1_

_FIG.-5_

_FIG.-2_

_FIG.-6_

_FIG.-3_

_FIG.-4_

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-3 339 084  (VEIT KARSTEN MICHAEL) * Revendication 1; figures 1-9 * | 1,10 | A 61 C  13/265 |
| Y | | 2,7-9 | |
| | --- | | |
| Y | US-A-4 547 159  (ZUEST et al.) * Figure 7 * | 2 | |
| | --- | | |
| A | FR-A-1 493 268  (J. CLEVELAND) * Figures 3,5 * | 4,5 | |
| | --- | | |
| A | DE-U-8 517 417  (K.-W. JANZEN) * Figure 5 * | 6 | |
| | --- | | |
| Y | DE-A-3 224 487  (J. SULC) * Figure 7 * | 7,8 | |
| | --- | | |
| Y | EP-A-0 164 768  (BACKES) * Figures 1,3 * | 9 | |
| | --- | | |
| A | CH-A-  502 816  (A. FLECHER) * Figure 7 * | 1 | |
| | ----- | | |

**DOMAINES TECHNIQUES RECHERCHES (Int. Cl.4)**

A 61 C

**Le présent rapport a été établi pour toutes les revendications**

| Lieu de la recherche | Date d'achèvement de la recherche | Examinateur |
|---|---|---|
| LA HAYE | 09-11-1988 | EHRSAM F.J.A. |